# DEMANDE DE BREVET EUROPEEN

(11) **EP 2 011 424 A2**
(43) Date de publication de la demande: **07.01.2009**
(21) Numéro de dépôt: 08356090.4
(22) Date de dépôt: 18.06.2008
(51) Int. Cl.: A47J 43/046

(54) **Appareil électroménager comprenant un récipient de travail muni d'un orifice permettant l'accouplement d'un robinet de distribution amovible**

(30) Priorité: 22.06.2007 FR 0704459
(71) Demandeur: SEB S.A., 69130 Ecully (FR)
(72) Inventeur: Landemaine, Evelyne, 53640 Le Ribay (FR); Goupil, Dominique, 53640 Champeon (FR); Blanchard, Thierry, 53000 Laval (FR)
(74) Mandataire: Kiehl, Hubert

(57) **Abrégé**

Appareil électroménager de préparation culinaire comportant un récipient de travail (2) amovible et un boîtier (1) comprenant un socle de réception (11) pour ledit récipient de travail (2) amovible, le récipient de travail (2) renfermant un outil rotatif destiné à être entraîné en rotation par un moteur (3) et comprenant un orifice à proximité de son extrémité inférieure au niveau duquel peut être accouplé un robinet de distribution (4) amovible, caractérisé en ce que l'appareil comprend des moyens (51, 7) pour détecter la présence du robinet (4) ou d'un bouchon de fermeture sur l'orifice et un dispositif de sécurité (9) interdisant le fonctionnement du moteur (3) en l'absence du robinet (4) ou du bouchon sur ledit orifice.

## Description

La présente invention se rapporte au domaine technique général des appareils électroménager de préparation culinaire comportant un récipient de travail comprenant un outil rotatif permettant le mixage des aliments et se rapporte plus particulièrement à un appareil électroménager de préparation culinaire comportant un récipient de travail comprenant un orifice à proximité de sa base au niveau duquel peut être accouplé un robinet de distribution amovible.

Il est connu, de la demande de brevet US 2006/0176765, un appareil blender de préparation culinaire comportant un récipient comprenant, à proximité de son extrémité inférieure, un orifice sur lequel peut être monté un robinet de distribution amovible. Ce document divulgue également la possibilité de remplacer le robinet par un bouchon de fermeture lorsque l'utilisateur ne souhaite pas utiliser le robinet. Un appareil muni d'un robinet de distribution présente l'avantage de posséder une bonne ergonomie d'utilisation en permettant une distribution immédiate de la mixture, sans manipulation du récipient.

Cependant, un tel appareil présente l'inconvénient de pouvoir fonctionner en l'absence du robinet de distribution ou du bouchon de fermeture sur l'orifice du récipient. L'utilisateur peut donc faire fonctionner l'appareil en ayant oublié de monter le robinet ou le bouchon sur l'orifice du récipient, ce qui peut provoquer d'importantes projections d'aliments au travers de l'orifice et éventuellement une dégradation de l'appareil dans le cas d'insertion de liquide dans le boîtier moteur.

Aussi, un but de la présente invention est de proposer un appareil de préparation culinaire comportant un récipient de travail muni d'un orifice, à proximité de son extrémité inférieure, permettant le montage d'un robinet de distribution et comportant un dispositif de sécurité empêchant le fonctionnement de l'appareil lorsque le robinet de distribution, ou un bouchon de fermeture, n'est pas monté sur l'orifice.

A cet effet, l'invention se rapporte à un appareil électroménager de préparation culinaire comportant un récipient de travail amovible et un boîtier comprenant un socle de réception pour le récipient de travail amovible, le récipient de travail renfermant un outil rotatif destiné à être entraîné en rotation par un moteur et comprenant un orifice à proximité de son extrémité inférieure au niveau duquel peut être accouplé un robinet de distribution amovible, caractérisé en ce que l'appareil comprend des moyens pour détecter la présence du robinet ou d'un bouchon de fermeture sur l'orifice et un dispositif de sécurité interdisant le fonctionnement du moteur en l'absence du robinet ou du bouchon sur l'orifice.

Selon une autre caractéristique de l'invention, les moyens pour détecter la présence du robinet ou du bouchon sur l'orifice comprennent une commande de sécurité qui est portée par le boîtier et qui est ramenée par des moyens de rappel vers une position de repos dans laquelle le dispositif de sécurité interdit le fonctionnement du moteur, la commande de sécurité étant déplacée vers une position active, dans laquelle le dispositif de sécurité autorise le fonctionnement du moteur, par un élément actionneur porté par le robinet, ou par le bouchon, lorsque le récipient est placé sur le socle de réception.

Selon une autre caractéristique de l'invention, le dispositif de sécurité comprend un interrupteur qui est actionné lors du déplacement de la commande de sécurité vers la position active.

Selon une autre caractéristique de l'invention, la commande de sécurité est disposée derrière une ouverture disposée en bordure du socle de réception.

Selon encore une autre caractéristique de l'invention, le robinet, ou le bouchon, comprend une bride de fixation permettant sa fixation sur un manchon d'accouplement entourant l'orifice du récipient et l'élément actionneur est porté par la bride de fixation.

Selon encore une autre caractéristique de l'invention, la bride de fixation est accouplée au manchon d'accouplement par une liaison baïonnette.

Selon une autre caractéristique de l'invention, l'élément actionneur est constitué par un doigt d'actionnement qui s'étend depuis la bride de fixation en direction du socle de réception.

Selon une autre caractéristique de l'invention, le doigt d'actionnement comporte un bord courbe formant une came venant coopérer avec le bord de l'ouverture pour achever la rotation de la bride de fixation, et assurer l'engagement complet de cette dernière sur le manchon d'accouplement, lorsque le récipient est introduit dans le socle de réception avec la bride de fixation du robinet, ou du bouchon, insuffisamment tournée sur le manchon d'accouplement.

L'invention concerne également un robinet de distribution amovible destiné à être accouplé à un orifice porté par un récipient de travail d'un appareil de préparation culinaire tel que précédemment décrit, caractérisé en ce qu'il comporte un élément actionneur apte à coopérer avec une commande de sécurité portée par l'appareil pour détecter la présence du robinet sur l'orifice du récipient et autoriser le fonctionnement de l'appareil.

L'invention concerne aussi un bouchon pour la fermeture d'un orifice porté par un récipient de travail d'un appareil électroménager de préparation culinaire tel que précédemment décrit, l'orifice étant prévu pour recevoir un robinet de distribution, caractérisé en ce qu'il comporte un élément actionneur apte à coopérer avec une commande de sécurité portée par l'appareil pour détecter la présence du bouchon de fermeture sur l'orifice du récipient et autoriser le fonctionnement de l'appareil.

On comprendra mieux les buts, aspects et avantages de la présente invention, d'après ia description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, l'appareil comportant un récipient, équipé d'un robinet, sur le point d'être monté sur le socle de réception du boîtier moteur,
- la figure 2 est une vue en perspective du récipient avec le robinet désaccouplé du récipient,
- la figure 3 est une vue en perspective du robinet démonté,
- la figure 4 est une vue en perspective d'un bouchon de fermeture de l'orifice du récipient,
- la figure 5 est une vue similaire à la figure 1, représentant le récipient muni du robinet une fois engagé dans le socle de réception du boîtier moteur de l'appareil.

Seuls les éléments nécessaires à la compréhension de l'invention ont été représentés. Pour faciliter la lecture des dessins les mêmes éléments portent les mêmes références d'une figure à l'autre.

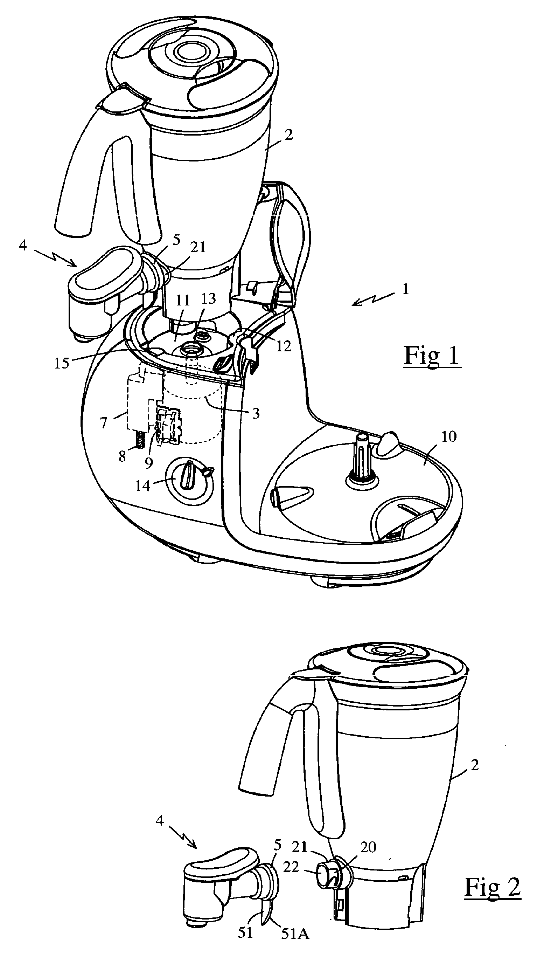

La figure 1 illustre un appareil de préparation culinaire comportant un boîtier 1 en forme de L comprenant classiquement un socle de réception 10 inférieur destiné à recevoir un récipient de grande capacité et un socle de réception 11 supérieur adapté pour recevoir un récipient 2 de type blender.

De manière connue en soi, le socle de réception 11 présente la forme d'une cavité de forme complémentaire à la base du récipient 2 et comporte des plots de positionnement 12 autorisant l'engagement du récipient 2 dans le socle de réception 11 selon une seule orientation.

Le socle de réception 11 comporte également un entraîneur 13 solidaire en rotation de l'arbre de sortie d'un moteur électrique 3 intégré dans le boîtier 1, représenté schématiquement en pointillé sur les figures, l'entraîneur 13 étant adapté pour s'accoupler avec l'extrémité inférieure d'un outil rotatif contenu dans le récipient 2, lorsque ce dernier est posé sur le socle de réception 11.

Un tel récipient 2 est particulièrement adapté pour la préparation de boissons, telles que des milk-shake, la mise en marche et la vitesse de rotation du moteur étant avantageusement pilotées au moyen d'une console de commande 14 disposée sur la face avant du boîtier 1.

Afin de faciliter le versement du contenu du récipient 2 dans un verre, le récipient 2 comporte un robinet de distribution 4 disposé à proximité de la base du récipient 2.

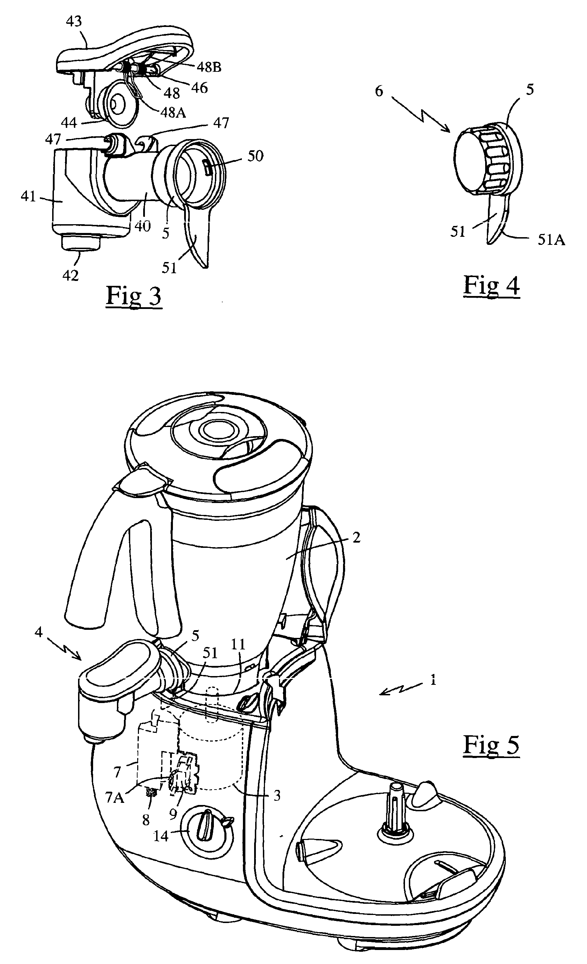

Conformément aux figures 2 et 3, le robinet 4 est monté de manière amovible sur le récipient 2, par exemple au moyen d'une liaison baïonnette, et comporte à cet effet une bride de fixation 5 comprenant des ergots 50 destinés à s'engager dans des gorges 20 d'un manchon d'accouplement 21 entourant un orifice 22 réalisé dans la paroi du récipient 2, à proximité de son extrémité inférieure.

De manière avantageuse, le robinet 4 comporte, dans le prolongement de la bride de fixation 5, un conduit d'arrivée des aliments 40 débouchant dans une tête 41 de déversement muni d'un orifice de sortie 42, la tête 41 servant de logement à des moyens de soupape à ouverture commandée par un levier d'actionnement 43.

Comme on peut mieux le voir sur la figure 3, les moyens de soupape du robinet sont constitués par un joint d'étanchéité 44 en silicone venant fermer l'extrémité du conduit d'arrivée des aliments 40, le joint d'étanchéité 44 étant porté par un bras solidaire du levier d'actionnement 43.

Le levier d'actionnement 43 est monté pivotant sur la partie supérieure du corps du robinet au moyen d'un axe d'articulation 46 s'engageant avantageusement dans deux crochets de guidage 47 ouverts sur leur partie inférieure avant afin de permettre l'engagement ou le désengagement rapide de l'axe d'articulation 46 et faciliter ainsi le nettoyage du robinet 4.

L'axe d'articulation 46 est maintenu engagé dans les crochets de guidage 47 par un ressort 48 enroulé autour de l'axe d'articulation 46 et dont une première partie 48A vient prendre appui contre le sommet du corps du robinet 4 et exerce une poussée maintenant l'axe d'articulation 46 à l'intérieur des crochets 47, le ressort 48 comportant également une deuxième partie 48B qui prend appui sous l'extrémité arrière du levier 43 pour ramener ce dernier dans une position de repos dans laquelle le joint d'étanchéité 44 vient fermer le robinet.

Plus particulièrement selon l'invention, l'appareil comporte des moyens permettant de détecter la présence du robinet 4 sur le manchon d'accouplement 21 ou permettant de détecter la fermeture de l'orifice 22 au moyen d'un bouchon 6, tel qu'illustré à la figure 4, vissé sur le manchon d'accouplement 21, le bouchon 6 comportant une bride de fixation 5 en tout point semblable à celle précédemment décrite pour le robinet 4.

A cet effet, le boîtier 1 comporte une commande de sécurité 7 qui prend place derrière une ouverture 15 réalisée en bordure du socle de réception 11, l'ouverture 15 étant avantageusement disposée au fond d'une échancrure se trouvant en dessous du manchon d'accouplement 21 du récipient lorsque ce denier est engagé dans le socle de réception 11.

La commande de sécurité 7 est mobile en translation verticale entre une position haute, illustrée sur la figure 1, correspondant à une position de repos vers laquelle la commande de sécurité 7 est ramenée par un ressort 8 et une position basse, illustrée à la figure 5, correspondant à une position active vers laquelle la commande de sécurité 7 est déplacée sous la poussée d'un doigt d'actionnement 51 porté par la bride de fixation 5 du robinet, ou du bouchon 6, le doigt d'actionnement 51 pénétrant dans l'ouverture 15 en bordure du socle de réception 11 lorsque le récipient 2 muni du robinet 4, ou du bouchon, 6 est mis en place dans le socle de réception 11.

De manière avantageuse, le doigt d'actionnement 51 présente une extrémité effilée et comporte un bord courbe 51A venant s'appuyer en bordure de l'ouverture 15 lorsque la bride de fixation est imparfaitement vissée sur le manchon d'accouplement 21 de sorte que le bord courbe 51A agit comme une came et génère un couple de serrage sur la bride de fixation 5 faisant tourner cette dernière et assurant une bonne étanchéité de la liaison.

L'appareil comporte également un dispositif de sécurité qui est associé aux moyens permettant de détecter la présence du robinet 4, ou du bouchon 6, en regard de l'orifice 22, et qui interdit le fonctionnement du moteur 3 de l'appareil en l'absence du robinet 4, ou du bouchon 6, sur le manchon d'accouplement 21 du récipient 2.

Conformément à la figure 5, le dispositif de sécurité comporte avantageusement un interrupteur de sécurité 9, intégré dans le boîtier 1, sur lequel vient agir une came 7A portée par la commande de sécurité 7 lorsque cette dernière est déplacée vers la position active afin d'autoriser le fonctionnement du moteur 3, cet interrupteur de sécurité 9 étant disposé sur le circuit d'alimentation électrique du moteur 3 et interrompant l'alimentation électrique du moteur 3 lorsqu'il n'est pas actionné par la commande 7, c'est-à-dire lorsque la commande 7 est en position de repos.

L'appareil ainsi réalisé présente donc l'avantage de ne pas pouvoir fonctionner lorsque la commande de sécurité n'est pas déplacée en position active par le doigt d'actionnement porté par le robinet ou le bouchon fermeture. Il en résulte une impossibilité de faire fonctionner l'appareil en l'absence du robinet ou du bouchon de fermeture sur le récipient.

De plus, la présence du doigt d'actionnement sur le bouchon présente l'avantage de garantir le bon serrage du robinet ou du bouchon sur le récipient, réduisant ainsi les risques de fuite.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, les moyens utilisés pour détecter la présence du robinet pourront par exemple être constitués par un aimant, porté par le robinet ou par le bouchon, venant agir sur un interrupteur à lame souple, également appelé ILS, porté par le boîtier moteur afin d'identifier la présence du robinet ou du bouchon.

## Revendications

1. Appareil électroménager de préparation culinaire comportant un récipient de travail (2) amovible et un boîtier (1) comprenant un socle de réception (11) pour ledit récipient de travail (2) amovible, le récipient de travail (2) renfermant un outil rotatif destiné à être entraîné en rotation par un moteur (3) et comprenant un orifice (22) à proximité de son extrémité inférieure au niveau duquel peut être accouplé un robinet de distribution (4) amovible, **caractérisé en ce que** l'appareil comprend des moyens (51, 7) pour détecter la présence du robinet (4) ou d'un bouchon de fermeture (6) sur l'orifice (22) et un dispositif de sécurité (9) interdisant le fonctionnement du moteur (3) en l'absence du robinet (4) ou du bouchon (6) sur ledit orifice (22).

2. Appareil électroménager selon la revendication 1, **caractérisé en ce que** les moyens pour détecter la présence du robinet (4) ou du bouchon (6) sur l'orifice (2) comprennent une commande de sécurité (7) qui est portée par le boîtier (1) et qui est ramenée par des moyens de rappel (8) vers une position de repos dans laquelle le dispositif de sécurité (9) interdit le fonctionnement du moteur et **en ce que** ladite commande de sécurité (7) est déplacée vers une position active, dans laquelle le dispositif de sécurité (9) autorise le fonctionnement du moteur (3), par un élément actionneur (51) porté par ledit robinet (4), ou par ledit bouchon (6), lorsque le récipient (2) est placé sur le socle de réception (11).

3. Appareil selon la revendication 2, **caractérisé en ce que** le dispositif de sécurité comprend un interrupteur (9) qui est actionné lors du déplacement de ladite commande de sécurité (7) vers la position active.

4. Appareil selon l'une quelconque des revendications 2 à 3, **caractérisé en ce que** la commande de sécurité (7) est disposée derrière une ouverture (15) disposée en bordure du socle de réception.

5. Appareil selon l'une quelconque des revendications 2 à 4, **caractérisé en ce que** le robinet (4), ou ledit bouchon (6), comprend une bride de fixation (5) permettant sa fixation sur un manchon d'accouplement (21) entourant l'orifice (22) du récipient et **en ce que** l'élément actionneur (51) est porté par ladite bride de fixation (5).

6. Appareil selon la revendication 5, **caractérisé en ce que** ladite bride de fixation (5) est accouplée audit manchon d'accouplement (21) par une liaison baïonnette.

7. Appareil selon l'une quelconque des revendications 4 à 5, **caractérisé en ce que** l'élément actionneur (51) est constitué par un doigt d'actionnement qui s'étend depuis la bride de fixation (5) en direction du socle de réception (11).

8. Appareil selon la revendication 7, **caractérisé en ce que** le doigt d'actionnement (51) comporte un bord courbe (51 A) formant une came venant coopérer avec le bord de l'ouverture (15) pour achever la rotation de la bride de fixation (5), et assurer l'engagement complet de cette dernière sur le manchon d'accouplement (21), lorsque le récipient (2) est introduit dans le socle de réception (11) avec la bride de fixation (5) du robinet (4), ou du bouchon (6), insuffisamment tournée sur le manchon d'accouplement (21).

9. Robinet de distribution (4) amovible destiné à être accouplé à un orifice (22) porté par un récipient de travail (2) d'un appareil de préparation culinaire selon l'une quelconque des revendications 1 à 8, **caractérisé en ce qu'**il comporte un élément actionneur (51) prévu pour coopérer avec une commande de sécurité (7) portée par l'appareil pour détecter la présence du robinet (4) sur l'orifice (22) du récipient et autoriser le fonctionnement de l'appareil.

10. Bouchon (6) pour la fermeture d'un orifice (22) porté par un récipient de travail (2) d'un appareil électroménager de préparation culinaire selon l'une quelconque des revendications 1 à 8, ledit orifice (22) étant prévu pour recevoir un robinet de distribution (4), **caractérisé en ce qu'**il comporte un élément actionneur (51) prévu pour coopérer avec une commande de sécurité (7) portée par l'appareil pour détecter la présence du bouchon (6) de fermeture sur l'orifice (22) du récipient et autoriser le fonctionnement de l'appareil.
